# EUROPÄISCHE PATENTSCHRIFT

(11) **EP 0 379 723 B1**
(45) Veröffentlichungstag und Bekanntmachung des Hinweises auf die Patenterteilung: **30.03.1994**
(21) Anmeldenummer: 89123848.7
(22) Anmeldetag: 22.12.1989
(51) Int. Cl.: B23C 3/06, B23B 5/18

(54) **Werkzeugbestückte Drehräummaschine**
Groove machining lathe equipped with tools
Tour à usiner des gorges équipé d'outils

(30) Priorität: 23.01.1989 DE 3901888
(43) Veröffentlichungstag der Anmeldung: 01.08.1990
(73) Patentinhaber: Boehringer Werkzeugmaschinen GmbH, D-73002 Göppingen (DE)
(72) Erfinder: Voss, Wolf-Dieter, Dipl.-Ing., D-7325 Boll (DE)
(74) Vertreter: Hansmann, Axel, Dipl.-Wirtsch.-Ing.

(56) Entgegenhaltungen:
- EP-A- 0 009 079
- EP-A- 0 334 298
- DE-A- 3 224 669
- DE-B- 1 300 419
- WERKSTATT UND BETRIEB. vol. 117, no. 5, Mai 1984, MUNCHEN DE Seiten 261 - 263; Gerhard Sitta et al.: "Kurbelwellenfräser erhöhen die Wirtschaftlichkeit".

## Beschreibung

Die Erfindung betrifft sogenannte Drehräummaschinen, die sich in jüngster Zeit verstärkt zur spanenden Bearbeitung von Kurbelwellen, Nockenwellen und ähnlich gestalteten Bauteilen durchgesetzt haben. Dabei wird das meist beidseitig eingespannte und angetriebene Werkstück schnell rotierend angetrieben, wobei die Schneiden, die am Umfang eines scheibenförmigen Werkzeuges sitzen, am Werkstück im Eingriff sind. Das scheibenförmige Werkzeug dreht sich dabei relativ langsam um eine zur Werkstücklängsachse parallele Achse. Die einzelnen Schneiden am Umfang des scheibenförmigen Werkzeuges können vom Drehpunkt gleichen oder zunehmenden Abstand besitzen. Für den Fall, daß die Schneiden auf einem Kreisbogen sitzen und immer den gleichen Abstand vom Drehpunkt des scheibenförmigen Werkzeugs aufweisen, ist während des Bearbeitungsvorganges eine Zustellung des Werkzeuges in X-Richtung, also auf die Drehachse des Werkstückes zu, erforderlich. Weisen die Schneiden dagegen einen vom Drehpunkt des Werkzeuges zunehmenden Abstand auf, so ist der Vorschub bereits alleine durch die Drehung des Werkzeuges gegeben.

Abhängig vom jeweiligen Bearbeitungsfall erstrecken sich die Schneiden über den gesamten Umfang des scheibenförmigen Werkzeuges oder auch nur über einen Teilbereich.

Diese Bearbeitungsprinzip wird besonders für die Endbearbeitung der Lagerflächen von Kurbelwellen und Nockenwellen eingesetzt, da hierbei wesentlich geringere Schnittdrücke auf das Werkstück einwirken als beim Drehen, so daß sich diese relativ labilen Werkstücke während der Bearbeitung auch nur entsprechend gering verformen. Zusätzlich bietet dieses Bearbeitungsverfahren eine sehr gute Oberflächenqualität.

Zur Durchführung des Drehräumens sind bisher zwei verschiedene Maschinentypen bekannt.

Die sogenannten Satzmaschinen sind zur Aufnahme von Drehräum-Werkzeugsätzen geeignet. Dabei handelt es sich um mehrere scheibenförmige Einzelwerkzeuge, die in einem gewissen Abstand parallel nebeneinander durch einen etwa zylindrischen Zentralkörper mit wesentlich geringerem Durchmesser miteinander verbunden sind und gemeinsam angetrieben werden. Der Zentralkörper ist dabei ebenso wie jedes einzelne Werkzeug in Längsrichtung, also einer zur Z-Richtung parallelen Ebene, teilbar. Die beiden Halbschalen werden beim Bestücken der Drehräummaschine auf eine speziell gestaltete Trägerwelle aufgesetzt, die in Z-Richtung verläuft und die beiden Werkzeugsupporte einstückig miteinander verbindet. Diese beiden Werkzeugsupporte sind bei einer sogenannten Satzmaschine in Z-Richtung in ihrer gegenseitigen Lage nicht verlängerbar und bilden eine Einheit mit U-förmigem Grundriß und festem Abstand in Z-Richtung. Abhängig davon, ob lediglich solche Werkzeuge eingesetzt werden, deren Schneiden einen zunehmenden Abstand vom Drehmittelpunkt aufweisen oder nicht, kann der Werkzeugsupport in X-Richtung bewegt werden oder nicht. Bei Werkzeugsupporten, die in X-Richtung nicht bewegbar sind, ist der Bauaufwand der Maschine geringer, andererseits muß für jeden neuen Anwendungsfall ein speziell gestaltetes Werkzeug beschafft werden. Mit derartigen Satzmaschinen werden deshalb in aller Regel die fluchtend zueinander liegenden Hauptlagerstellen solcher Kurbelwellen in einem Arbeitsgang fertig bearbeitet, die über lange Zeit und in großen Stückzahlen produziert werden müssen.

Soll dagegen nach dem Drehräumprinzip eine Vielzahl unterschiedlicher und oft wechselnder Werkstücke fertiggestellt werden, so wird mit sogenannten flexiblen Drehräummaschinen gearbeitet. Dabei handelt es sich um solche Drehräummaschinen, die wenigstens zwei unabhängig voneinander in X- als auch in Z-Richtung verfahrbare Werkzeugsupporte aufweisen, in welche jeweils ein scheibenförmiges Werkzeug antreibbar eingesetzt werden kann.

Dadurch, daß die Werkzeugsupporte und damit die eingesetzten Werkzeuge in X- als auch in Z-Richtung bewegbar sind, können beliebige rationssymmetrische Flächen an den unterschiedlichsten Werkstücken bearbeitet werden. Da jedoch nur beispielsweise zwei Werkzeuge gleichzeitig im Einsatz sind, ist der Bearbeitungsfortschritt weniger schnell als bei vier oder mehr gleichzeitig im Einsatz befindlichen scheibenförmigen Werkzeugen eines Drehräum-Werkzeugsatzes.

Somit sind diese flexible Drehräummaschinen insbesondere geeignet zur Bearbeitung von Hublagerstellen, zur Nachbearbeitung einzelner Hauptlagerstellen oder etwa auch zur Bearbeitung von Hinterstichen am Übergang von der Lagerfläche zur Wange.

Bei den flexiblen Drehräummaschinen wird als Werkzeugaufnahme, welche ja in Z-Richtung ausgerichtet sein muß, der am Ende der Spindel vorhandene Stellkegel mit dem dran anschließenden Plananschlag verwendet, oder ein genormtes Backenfutter, wie es auch als Spindelkopffutter zum Einsatz kommt. Das scheibenförmige Werkzeug sowie der Zentralkörper, auf dem es befestigt ist, müssen daher nicht mehr in einer zur Z-Richtung parallelen Ebene geteilt sein, sondern der Zentralkörper muß auf der dem Werkzeugsupport zugewandten Seite lediglich so ausgebildet sein, daß er an der Werkzeugaufnahme befestigt und gespannt werden kann.

Dadurch umgeht man zwar eine ganze Reihe von Nachteilen, wie sie bei den in Längsrichtung teilbaren Werkzeugsätzen der Satzmaschinen vorliegen, da die dort verwendeten Halbschalen ja auf einer speziell gestalteten Trägerwelle aufgesetzt und dort verankert, also gespannt werden müssen, wobei sowohl in X-Richtung als auch in Z-Richtung genaueste Fluchtung der beiden Halbschalen Voraussetzung für ein einwandfreies Bearbeitungsergebnis ist. Zusätzlich müssen sehr hohe Spannkräfte zum Festhalten der Halbschalen auf der Trägerwelle aufgebracht werden können. Andererseits ist durch die einseitige Aufnahme eines scheibenförmigen Werkzeuges bzw. seines Zentralkörpers in einem Backenfutter keine beidseitige Einspannung des Werkzeuges bzw. des Zentralkörpers mehr gegeben, mit allen daraus resultierenden Nachteilen.

Es ist daher der Zweck der vorliegenden Erfindung, eine werkzeugbestückte Drehräummaschine zu schaffen, die, abhängig vom jeweiligs vorliegenden Bearbeitungsfall, entweder als Satzmaschine oder als flexible Drehräummaschine mit einzeln verfahrbaren scheibenförmigen Werkzeugen eingesetzt werden kann.

Diese Aufgabe wird durch die Merkmale des Anspruchs 1 gelöst. Bei einer solchen Drehräummaschine müssen wenigstens zwei Werkzeugsupporte vorhanden sein, die wie bei der flexiblen Drehräummaschine jeweils für sich und unabhängig voneinander sowohl in X- als auch in Z-Richtung verfahrbar sind. Am vorteilhaftesten besteht jeder Werkzeugsupport aus einem Obersupport und einem Untersupport, wobei der Obersupport das antreibbare Futter zur Aufnahme des Werkzeuges trägt und in X-Richtung auf dem Untersupport verfahrbar ist, welcher wiederum in Z-Richtung auf dem Bett der Drehräummaschine verfahrbar ist.

Gleichzeitig muß jedoch eine Synchronisierung der Bewegungen in X-Richtung möglich sein. Dabei kann es sich entweder um eine elektrische Synchronisierung handeln, bei der entweder die Längsbewegungen der Supporte in X-Richtung oder aber die Drehbewegung der Antriebsspindel für die entsprechende Längsbewegung durch elektrische Impulsgeber überwacht und aneinander angeglichen werden, oder um eine sogenannte mechanische Synchronisierung, bei der die Antriebselemente der beiden Supporte, eben etwa die Antriebsspindeln, über eine sogenannte Königswelle miteinander verbunden sind, um sicherzustellen, daß sich beide Supporte nur synchron in X-Richtung bewegen können.

Wenn weiterhin wenigstens zwei Werkzeugsupporte vorhanden sind, bei denen sich die Werkzeugaufnahmen für die einzelnen scheibenförmigen Werkzeuge in Richtung auf den anderen Werkzeugsupport zu befinden, so können die beiden Werkzeugsupporte in eine in Z-Richtung zueinander fluchtende Position gebracht werden, um einen Drehräum-Werkzeugsatz so einzusetzen, der an den einander gegenüberliegenden Enden in jeweils einer der Werkzeugaufnahmen der beiden Werkzeugsupporte gehalten wird. Dies ist dadurch möglich, daß wenigstens einer der beiden Werkzeugsupporte in Z-Richtung verfahrbar ist, um das Einsetzen des Drehräum-Werkzeugsatzes in die eine Aufnahme zu ermöglichen und anschließend durch Verringern des Abstandes zwischen den Supporten die zweite Werkzeugaufnahme in Ansatz zu bringen.

Auf diese Weise muß der Drehräum-Werkzeugsatz selbstverstädlich nicht mehr, wie beim Einsatz in den herkömmlichen Satzmaschinen notwendig, in Längsrichtung samt Zentralkörper teilbar sein. Alle damit zusammenhängenden Nachteile einer äußerst präzisen Werkzeugmontage im Hinblick auf die Fluchtung der beiden Halbschalen zueinander und der Spannung der Halbschalen auf einer inneren Trägerwelle fallen damit weg. Nunmehr ist es lediglich notwendig, daß der Zentralkörper des Drehräum-Werkzeugsatzes, der die einzelnen scheibenförmigen WErkzeuge trägt, an seinen Enden so gestaltet ist, daß er in den an den Supporten verwendeten Werkzeugaufnahmen gehalten werden kann. Die Enden des Zentralkörpers müssen also an den Steilkegeln an den Enden der Antriebsspindeln angepaßt sein, oder bei Verwendung von Backenfuttern zylindrische Umfangsflächen aufweisen.

Auf diesem Zentralkörper können nun, wie es bei Drehräum-Werkzeugsätzen ja beabsichtigt ist, eine ganze Reihe einzelner scheibenförmiger Werkzeuge aufgebracht und in ihrer gegenseitigen Lage in Z-Richtung verändert werden, je nach Bedürfnis des jeweiligen Anwendungsfalles. Andererseits kann die Maschine nach Abschalten der Synchronisation der X-Bewegungen der Werkzeugsupporte herkömmlich als flexible Drehräummaschine eingesetzt werden, wobei in jedes der beiden Aufnahmen ein scheibenförmiges Werkzeug bzw. dessen Zentralkörper eingesetzt wird. Darüber hinaus ist jedoch für Fälle, in denen es nicht auf den schnellstmöglichen Bearbeitungsfortschritt, sondern höchstmögliche Genauigkeit ankommt, möglich, zwischen die beiden fluchtenden Spannfutter der beiden Werkzeugsupporte einen Zentralkörper einzusetzen, der somit sehr stabil beidseitig gespannt ist, auf diesem Zentralkörper jedoch nur ein einzelnes, zur Zeit benötigtes scheibenförmiges Werkzeug aufzubringen. Besonders bei einer geringen axialen Länge des Zentralkörpers ergibt sich hieraus eine sehr stabile Werkzeuglagerung mit entsprechend präzisem Bearbeitungsergebnis.

Gegenüber den herkömmlichen Satzmaschinen bietet die erfindungsgemäße Maschine weiterhin den Vorteil, daß bei Einsatz eines anderen Satzwerkzeuges, welches beispielsweise einen Zentralkörper mit größerer oder geringerer axialer Erstreckung aufweist, lediglich eine Abstandsveränderung der beiden Supporte notwendig ist, wogegen bei den herkömmlichen Satzmaschinen eine relative Lageveränderung der Teile des Supportes nicht möglich war. Vielmehr mußte hierbei der auf der Drehräummaschine befindliche Support ausgetauscht werden, um eine Umrüstung auf den gewünschten neuen Abstand zu ermöglichen. Ganz abgesehen von diesem hohen Umrüstaufwand und den Schwierigkeiten bei der fluchtenden Montage der beiden Halbschalen des Satz werkzeuges waren die für die einzelne und unabhängig voneinander steuerbare Spannung der beiden Halbschalen des Satzwerkzeuges notwendigen Einrichtungen auch wesentlich teurer, als die nunmehr zum Einsatz kommenden Werkzeugaufnahmen, bei denen es sich um die genormte Gestaltung der Spindel-Enden mit Steilkegel und Plananlage handelt, die nur durch eine geeignete Spannmöglichkeit (manuell oder hydraulisch) ergänzt ist.

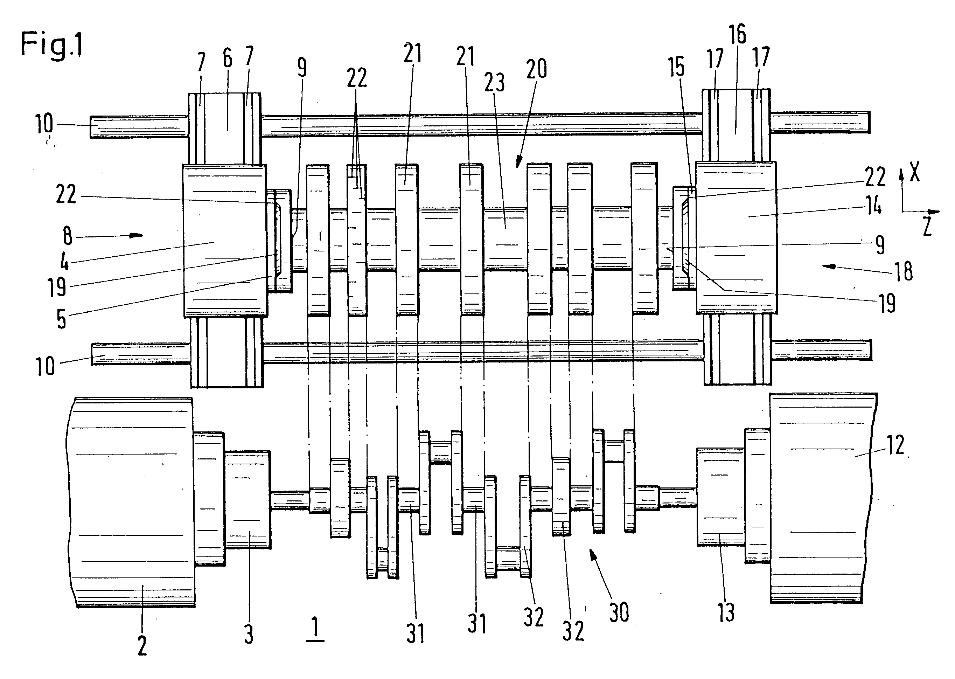

Eine Ausführungsform gemäß der Erfindung ist im folgenden anhand der Zeichnung beispielhaft näher beschrieben.

Die Darstellung zeigt eine Draufsicht auf eine Drehräummaschine. Alle dargestellten Aggregate sind auf dem Bett 1 der Drehräummaschine montiert.

Im Vordergrund ist eine willkürlich gestaltete Kurbelwelle 30 als Werkstück dargestellt, die mit ihren Enden in den Spannfuttern 3 bzw. 13 der einander gegenüberliegenden Spindelstöcke 2 bzw. 12 eingespannt ist und drehend angetrieben werden kann. Selbstverständlich muß hierzu die Drehung der beiden Spindelstöcke 2 und 12 in bekannter Art und Weise, also entweder elektrisch oder mechanisch, synchronisiert sein, um eine Torsion der eingespannten Kurbelwelle 30 während der Drehung zu verhindern. Wenn nun die Hauptlagerstellen 31 einschließlich der Endlagerzapfen der Kurbelwelle 30 bearbeitet werden sollen, so ist es sinnvoll diese fluchtenden Lagerstellen gemeinsam während eines einzigen Bearbeitungsschrittes durch einen angepaßten Drehräum-Werkzeugsatz 20 zu bearbeiten. Dieser Drehräum-Werkzeugsatz 20 ist parallel zur Kurbelwelle 30 angeordnet und besteht aus einem Zentralkörper 23 mit etwa zylindrischem Querschnitt, auf dem parallel zueinander eine den Bearbeitungsstellen entsprechende Anzahl von scheibenförmigen Werkzeugen 21 aufgebracht und befestigt sind. Auf jedem dieser scheibenförmigen Werkzeuge 21 befinden sich am Umfang eine Vielzahl von einzelnen Schneiden 22, die an der Bearbeitungsstelle in Eingriff gelangen. Die axiale Lage der einzelnen scheibenförmigen Werkzeuge 21 sowie deren Breite richtet sich nach der gegenseitigen Lage und auch Breite der Bearbeitungsstellen am Werkstück, also in diesem Falle der Hauptlagerflächen der Kurbelwelle 30. Gleichzeitig mit den Hauptlagerstellen 31 werden meist auch beim Hineinfahren in das Werkstück die benachbarten Flächen der Wangen 31 der Kurbelwelle bearbeitet.

Um eine Berührung mit den exzentrischen Teilen der Kurbelwelle zu vermeiden, ist der Durchmesser des Zentralkörpers 23 selbstverständlich wesentlich geringer als der der scheibenförmigen Werkzeuge 21.

Dieser Zentralkörper 23 ist an seinen gegenüberliegenden Enden 9 so gestaltet, daß er von den Werkzeugaufnahmen 5 bzw. 15 der Werkzeugsupporte 8 bzw. 18 gespannt werden kann. In aller Regel handelt es sich hierbei um die genormte Form am Ende der Antriebsspindeln, die einen Steilkegel 19 und einen Plananschlag 20 aufweist. An diesen Enden wird der Zentralkörper 23 durch einfaches Verschrauben oder durch nicht dargestellte hydraulische Spannmittel, die im Inneren der Antriebsspindeln angeordnet sind, befestigt.

Jeder der beiden Werkzeugsupporte 8 bzw. 18 besteht aus einem Obersupport 4 bzw. 14, der in X-Richtung entlang jeweils parallel laufender Führungen 7 bzw. 17 auf dem jeweiligen Untersupport 6 bzw. 16 verschiebbar ist. Diese Bewegung der Obersupporte 4 bzw. 14 in X-Richtung muß wahlweise synchronisierbar sein, wobei die bekannten Mittel der elektrischen oder mechanischen Synchronisierung zur Verfügung stehen. Die parallel zur X-Richtung verlaufenden Führungen 7 bzw. 17 müssen hierbei nicht waagerecht verlaufen, sondern können auch schräg oder gar senkrecht stehen.

Die beiden Untersupporte 6 bzw. 16 sind weiterhin entlang zweier paralleler Führungen 10 in Z-Richtung verschiebbar. Auch diese beiden Führungen 10 für die Führung entlang der Z-Richtung müssen nicht auf derselben Höhe nebeneinander liegen, sondern können sich auf unterschiedlicher Höhe befinden, jedoch sind diese beiden Führungen 10 auf dem Bett 1 der Drehräummaschine aufgebracht.

Mit dieser Maschinenkonfiguration und entsprechend gestaltetem Drehräum-Werkzeugsatz 20 kann der Werkzeugsatz durch die beiden Futter 5 und 15 synchron angetrieben werden und durch synchrone Bewegung der beiden Obersupporte 4 bzw. 14 in X-Richtung auch unter Wahrung der Parallelität zwischen Werkzeug und Werkstück auf das Werkstück zu bzw. von diesem weg bewegt werden.

Ist es beabsichtigt, die Hauptlagerstellen einer anderen Kurbelwelle oder überhaupt eines anderen Werkstückes zu bearbeiten, so können nach Abstandsvergrößerung in Z-Richtung zwischen den beiden Supporten 8 bzw. 18 der bisherige Drehräum-Werkzeugsatz 20 ausgespannt und ein neuer Werkzeugsatz geringerer oder größerer axialer Länge, entsprechend dem gewünschten Werkstück, eingesetzt werden. Ebenso kann die Maschine durch Einspannen einzelner, voneinander unabhängiger scheibenförmiger Werkzeuge 21 bzw. deren Zentralkörper 23 in die Werkzeugaufnahmen 5 bzw. 15 flexibel betrieben werden. Die beiden Supporte 8 bzw. 18 bzw. deren Teilkomponenten, die Obersupporte 4, 14 bzw. die Untersupporte 6, 16 werden unabhängig voneinander verfahren, um das an ihnen befestigte scheibenförmige Werkzeug 21 an die jeweils gewünschte Bearbeitungsstelle zu bringen.

## Patentansprüche

1. Werkzeugbestückte Drehräummaschine mit zwei in X- und Z-Richtung unabhängig voneinander verfahrbaren Werkzeugsupporten (8, 18), die jeweils wenigstens eine in Z-Richtung gerichtete Werkzeugaufnahme (5, 15) aufweisen und als Werkzeug in jeder Werkzeugaufnahme ein in Längsrichtung ungeteilt ausgebildetes Drehräum-Werkzeug (20) eingesetzt ist, wobei
- als Werkzeug ein Drehräum-Werkzeugsatz (20) eingesetzt ist, bei dem die Enden (9) seines Zentralkörpers (23) so ausgebildet sind, daß sie zur Aufnahme in einem Spannfutter geeignet sind,
- die in Z-Richtung weisenden Werkzeugaufnahmen (5, 15) der beiden Werkzeugsupporte (8, 18) in Richtung auf den jeweils anderen Werkzeugsupport (18, 8) weisen,
- der Drehräum-Werkzeugsatz (20) mit den Enden (9) in die beiden einander zugewandten Werkzeugaufnahmen (5, 15) der in fluchtender Position befindlichen Werkzeugsupporte (8, 18) eingespannt und antreibbar ist,
- eine Synchronisation der Längsbewegung beider Werkzeugsupporte (8, 18) in X-Richtung zuschaltbar ist und
- eine Synchronisation der Drehbewegungen der beiden Werkzeugaufnahmen (5, 15) der beiden Werkzeugsupporte (8, 18) zuschaltbar ist.

2. Drehräummaschine nach Anspruch 1, **dadurch gekennzeichnet**, daß es sich bei den Werkzeugaufnahmen (5, 15) um die genormte Gestaltung der Enden der Antriebsspindeln mit Steilkegel (19) und Plananschlag (22), ergänzt um eine geeignete Spanneinrichtung, handelt.

3. Drehräummaschine nach Anspruch 1 oder 2, **dadurch gekennzeichnet,** daß es sich bei der Spannenrichtung um eine hydraulische Spanneinrichtung im Inneren der Antriebsspindel handelt.

4. Drehräummaschine nach Anspruch 1, **dadurch gekennzeichnet**, daß es sich bei der Werkzeugaufnahme um ein Backenfutter handelt.

5. Drehräummaschine nach Anspruch 4, **dadurch gekennzeichnet**, daß es sich beim Backenfutter um ein genormtes Spindelkopffutter handelt.

6. Drehräummaschine nach einem der vorhergehenden Ansprüche, **dadurch gekennzeichnet,** daß die Werkzeugsupporte (8, 18) aus einem Obersupport (4, 14) bestehen, der in X-Richtung auf dem Untersupport (6, 16) verschiebbar ist, welcher wiederum in Z-Richtung bewegbar ist.

## Claims

1. Turn broaching machine equipped with tools, said machine having two tool rests (8, 18) which can be moved independently of each other in the X- and Z-direction and each of which has at least one tool holding fixture (5, 15) directed in the Z-direction, with a turn broaching tool (20), formed in one piece in the longitudinal direction, being inserted as a tool in each tool holding fixture, wherein
- a turn broaching tool set (20) is inserted as a tool, in which set the ends (9) of its central body (23) are formed in such a way that they are suitable for accommodation in a chuck;
- the tool holding fixtures (5, 15) of the two tool rests (8, 18) pointing in the Z-direction point in the direction of the other respective tool rest (18, 8);
- the turn broaching tool set (20) is clamped, and can be driven, with the ends (9) in the two facing tool holding fixtures (5, 15) of the tool rests (8, 18) located in an aligned position;
- the longitudinal movement of the two tool rests (8, 18) can be synchronized in the X-direction;
- the rotational movements of the two tool holding fixtures (5, 15) of the two tool rests (8, 18) can be synchronized.

2. Turn broaching machine according to claim 1, characterised in that in the case of the tool holding fixtures (5, 15) the ends of the driving spindles are to be shaped in a standard way with a steep-angle taper (19) and transverse stop (22) completed by a suitable clamping device.

3. Turn broaching machine according to claim 1 or 2, characterised in that the clamping device is a hydraulic clamping device in the interior of the driving spindle.

4. Turn broaching machine according to claim 1, characterized in that the tool holding fixture is a jaw chuck.

5. Turn broaching machine according to claim 4, characterized in that the jaw chuck is a standard spindle head chuck.

6. Turn broaching machine according to one of the preceding claims, characterised in that the tool rests (8, 18) consist of an upper rest (4, 14) which can be shifted in the X-direction on the lower rest (6, 16) which in turn can be moved in the Z-direction.

## Revendications

1. Machine de brochage par rotation équipée d'outils avec deux supports d'outils (8,18), déplaçables indépendamment l'un de l'autre dans deux directions X et Z, qui présentent chacun un dispositif de préhension d'outil (5,15), dirigé dans au moins une direction Z, et un outil de brochage par rotation formé tout entier dans le sens longitudinal est utilisé comme outil dans chaque dispositif de préhension d'outil dans laquelle
- un jeu d'outils de brochage (20) est utilisé comme outil dans lequel les extrémités (9) de son corps central (23) sont formées de manière à pouvoir être reçues dans un mandrin,
- les dispositifs de préhension d'outils (5,15) des deux supports d'outils, dirigés dans la direction Z, sont dirigés en direction de l'autre support d'outil respectif (18,8),
- le jeu d'outils de brochage par rotation (20) est monté et susceptible d'être entraîné par les extrémités (9) dans les deux dispositifs de préhension d'outils (5,15) diriges l'un vers l'autre des supports d'outils (8,18) disposés en position alignée,
- une synchronisation du mouvement longitudinal des deux supports d'outils peut être embrayée en direction X et
- une synchronisation du mouvement de rotation des deux dispositifs de préhension d'outils (5,15) des deux supports d'outils (8,18) peut être embrayée.

2. Machine de brochage par rotation selon la revendication 1, caractérisée en ce que le dispositif de préhension d'outil se rapporte à des broches d'entraînement dont les extrémités ont une configuration normalisée avec angle obtus (19) et butée à déplacement transversal (22) complété par un dispositif de serrage approprié.

3. Machine de brochage par rotation selon la revendication 1 ou 2, caractérisée en ce que le dispositif de serrage se rapporte à un dispositif de serrage hydraulique à l'intérieur de la broche d'entraînement.

4. Machine de brochage par rotation selon la revendication 1, caractérisée en ce que le dispositif de préhension d'outil se rapporte à un mandrin à mâchoires.

5. Machine à brocher par rotation selon la revendication 4, caractérisée en ce que le mandrin à mâchoires se rapporte à un mandrin à broche normalisé.

6. Machine selon l'une des revendications précédentes, caractérisée en ce que le support d'outil (8,18) est formé d'un support supérieur (4,14) qui est déplaçable sur le support inférieur (6,16), lequel est par ailleurs déplaçable dans la direction Z.
